# EUROPÄISCHE PATENTSCHRIFT

(11) **EP 4 126 607 B1**
(45) Veröffentlichungstag und Bekanntmachung des Hinweises auf die Patenterteilung: **05.06.2024**
(21) Anmeldenummer: 21718085.0
(22) Anmeldetag: 07.04.2021
(51) Int. Cl.: B60T 7/20, B60T 8/17, B60T 8/1755, B60T 8/24, B60T 8/32, B60T 8/42, B60T 13/08, B60T 13/14, B60D 1/24

(54) **BREMSSYSTEM FÜR EIN ANHÄNGERFAHRZEUG UND ANHÄNGERFAHRZEUG MIT EINEM SOLCHEN BREMSSYSTEM**
BRAKE SYSTEM FOR A TRAILER VEHICLE, AND TRAILER VEHICLE COMPRISING SUCH A BRAKE SYSTEM
SYSTÈME DE FREINAGE POUR VÉHICULE REMORQUÉ ET VÉHICULE REMORQUÉ COMPRENANT UN TEL SYSTÈME DE FREINAGE

(30) Priorität: 17.04.2020 DE 102020204924
(43) Veröffentlichungstag der Anmeldung: 08.02.2023
(73) Patentinhaber: Volkswagen Aktiengesellschaft, 38440 Wolfsburg (DE)
(72) Erfinder: WITTE, Bastian, 38179 Groß Schwülper (DE)
(86) Internationale Anmeldenummer: PCT/EP2021/059064
(87) Internationale Veröffentlichungsnummer: WO 2021/209294

(56) Entgegenhaltungen:
- DE-A1- 2 120 293
- DE-A1- 3 321 511
- DE-U1- 20 117 647
- DE-U1-202014 007 403

## Beschreibung

Die Erfindung betrifft gemäß Patentanspruch 1 ein Bremssystem für ein Anhängerfahrzeug und gemäß Patentanspruch 8 ein mit einem solchen Bremssystem ausgerüstetes Anhängerfahrzeug.

Heutige Anhängerfahrzeuge ("Anhänger"), insbesondere für Personenkraftwagen, sind mit einer mechanischen Auflaufbremsanlage ausgestattet. In einem Zugbetrieb zieht der Personenkraftwagen ("Zugfahrzeug") den Anhänger, der mittels einer Kopplungseinrichtung und einer Deichsel an das Zugfahrzeug angekoppelt ist. In einem Schiebebetrieb läuft der Anhänger, insbesondere aufgrund eines Bremsens des Zugfahrzeugs, auf dieses auf, das heißt, beim Bremsen bzw. in einem Bremsbetrieb ist - zumindest zeitweise - eine Fahrgeschwindigkeit des Zugfahrzeugs geringer als eine Fahrgeschwindigkeit des Anhängers.

Unter dem Auflaufen des Anhängers auf das Zugfahrzeug ist ein mittels eines Federelements in einer Zugstellung gehaltenes Schieberelement einer Betriebsbremsanlage des Anhängers unter einem Spannen des Federelements aus der Zugstellung ausrückbar, das heißt in eine Bremsstellung bis hin in eine Vollbremsstellung verstellbar. Bei diesem Verstellen bzw. aufgrund des Verstellens des Schieberelements werden, insbesondere über Bowdenzüge, Bremsbeläge der Betriebsbremsanlage des Anhängers an Bremstrommeln und/oder Bremsscheiben angelegt. Je stärker das Zugfahrzeug bremst oder gebremst wird, desto stärker wird das Federelement gespannt oder zusammengedrückt bzw. desto weiter wird das Schieberelement in Richtung hin zu der Vollbremsstellung verstellt und desto stärker werden Räder des Anhängers gebremst.

Wenn die Fahrzeugkombination aus dem Personenkraftwagen und dem daran angekoppelten Anhängerfahrzeug ("Gespann"), insbesondere aus dem Stillstand heraus, rückwärts beschleunigt werden soll, dann läuft das Zugfahrzeug entgegen einer Vorwärtsfahrtrichtung auf den Anhänger und folglich auf das Schieberelement auf, wodurch dieses ebenfalls aus der Zugstellung, das heißt in die Bremsstellung verstellt wird. Daher werden die Räder des Anhängers in unerwünschter Weise gebremst, was eine erwünschte Rückwärtsfahrt zumindest behindert. Damit das Gespann überhaupt rückwärtsfahren kann, gibt es in der Betriebsbremsanlage des Anhängers eine sogenannte Rückfahrautomatik. Mittels derer werden die Bremstrommeln bzw. Bremsscheiben momentenfrei gestellt bzw. freigegeben, indem die Bremsbeläge davon entfernt werden, wenn eine Verstellstrecke, um welche das Schieberelement bei der Rückwärtsfahrt aus der Zugstellung ausgerückt wird oder wurde, eine bestimmte Grenzstrecke überschritten hat. Nachteilig hierbei ist, dass das Zugfahrzeug entgegen der Vorwärtsfahrtrichtung gegen den gebremsten Anhänger drückt, bis die Grenzstrecke überschritten ist. Dann erfolgt das Lösen der Bremsbeläge von den Bremsscheiben bzw. Bremstrommeln ruckartig, weswegen der Anhänger und/oder das Zugfahrzeug aufgrund dieses ruckartigen Lösens eine Erschütterung erfahren/erfährt. Dies kann sich auf Bauteile des Gespanns und/oder eine Fracht negativ auswirken.

Die Ausführung dieser herkömmlichen Rückfahrautomatik ist rein mechanisch. Bei der Auslegung der Rückfahrautomatik ist besonderer Aufwand dahingehend zu betreiben, dass selbst bei besonders hoher und/oder schlagartig aufgebauter Verzögerung im Fahrbetrieb, insbesondere bei Vorwärtsfahrt, die Rückfahrautomatik nicht versehentlich ausgelöst oder aktiviert wird, denn dann würde der Anhänger das Gespann nachteilig nicht mehr mitbremsen.

Ferner kann der Anhänger hydraulisch bremsbar ausgebildet sein. Dazu sind in oder an der Deichsel ein Hauptbremszylinder sowie ein Bremsflüssigkeitsreservoir angeordnet. In diesem Fall ist die Betriebsbremsanlage des Anhängers dann nicht über die Bowdenzüge, sondern hydraulisch betätigbar bzw. betreibbar. Alternativ oder zusätzlich kann die Betriebsbremsanlage des Anhängers pneumatisch betreibbar ausgebildet sein. Ferner ist es denkbar, das Gespann, insbesondere den Anhänger, mit einem automatischen Blockierverhinderungssystem (ABV) bzw. Antiblockiersystem (ABS) auszurüsten, um ein Blockieren der Räder des Anhängers zu vermeiden, idealerweise zu verhindern.

Bei einem Anhänger mit hydraulisch und/oder pneumatisch betreibarer Auflaufbremse tritt aber das gleiche Problem auf, dass eine Rückfahrautomatik erforderlich ist, um eine Rückwärtsfahrt des Anhängers bzw. des Gespanns zu ermöglichen. Üblicherweise ist dafür (manuell, das heißt von Hand) ein Betätigungselement aus einer Normalstellung in eine Blockierstellung, etwa ein Hebel umzulegen. Dadurch wird die Auflaufbremsanlage, zum Beispiel das Schieberelement, mechanisch blockiert, sodass in diesem blockierten Zustand kein hydraulischer Druck aufgebaut wird und die Bremsbeläge in einer von den Bremstrommeln bzw. Bremsscheiben entfernten Stellung blockiert sind. Wenn aber nach der Rückwärtsfahrt vergessen wird oder wurde, das Betätigungselement wieder in dessen Normalstellung zurückzustellen, dann bremst der Anhänger das Gespann dauerhaft nicht mehr mit, was einen Bremsweg des Gespanns in nachteiliger Weise erheblich verlängert - eine Verkehrssicherheit des Gespanns wäre so besonders gering. Daher sind Systeme bekannt, die dazu ausgebildet sind, das Betätigungselement bzw. den Hebel unter Auftreten einer Zugkraft zwischen dem Zugfahrzeug und dem Anhänger, etwa an einem Kupplungskopf der Kopplungseinrichtung, automatisch wieder in die Normalstellung zurückzustellen.

Die DE 10 2018 110 011 A1 offenbart ein Schleuderschutzsystem für einen Fahrzeuganhänger, mit wenigstens einer Betätigungseinheit und einer hydraulischen Bremseinrichtung zur Betätigung wenigstens einer Radbremse, wobei die Betätigungseinheit mit einer elektronischen Stabilitätssteuerung verbunden ist und wobei die Betätigungseinheit mit der Bremseinrichtung zur Übertragung von Bremskräften wirkverbindbar oder wirkverbunden ist. Für eine Rückwärtsfahrt des Anhängers sind ein Hauptbremszylinder und die Betätigungseinheit mechanisch voneinander trennbar, sodass kein Bremskraftübertragung auf den Hauptbremszylinder erfolgt.

Die EP 1 375 279 A1 offenbart eine Vorrichtung zur Verringerung von Schlingerbewegungen eines auflaufgebremsten Anhängers mit hydraulischer Bremskraftübertragungseinrichtung, wobei beim Auftreten von Schlingerbewegungen die rechte und die linke Seite des Anhängers in unterschiedlicher, den Schlingerbewegungen entgegenwirkender Weise abgebremst werden. Diese Vorrichtung kann ein Antiblockiersystem (ABS) aufweisen, mittels dessen im Fall einer absichtlichen Rückwärtsfahrt ein Bremsdruck an Radbremsen abgebaut werden kann.

Die DE 10 2007 024 108 A1 offenbart eine hydraulische Anhängerbremsanlage mit einer elektronischen Steuer- oder Regelungseinheit, wobei mindestens zwei Radbremsen über ein Trennventil mit einem Hauptbremszylinder verbunden sind und den Radbremsen ein Einlassventil zugeordnet ist, das bei Rückwärtsfahrten geschlossen wird. Die Rückwärtsfahrt wird erkannt wenn die Rückfahrscheinwerfer aufleuchten.

Die DE 201 17 647 U1 betrifft ein Rückfahrsystem für Auflaufbremsanlagen von Anhängern, mit einer hydraulischen Bremskraftübertragungseinrichtung, einer Steuerungseinrichtung und einem in der Bremskraftübertragungseinrichtung angeordneten, von der Steuerungseinrichtung angesteuerten Umschaltventil, das im Fall des Zurücksetzens des Anhängers die von den Radbremsen des Anhängers zurückströmende Hydraulikflüssigkeit zu einem Flüssigkeitsvorratsbehälter leitet.

Bei diesen herkömmlichen Systemen wird für eine Rückwärtsfahrt des jeweiligen Anhängers lediglich auf eine rein elektrische bzw. elektronische Bezugsgröße gesetzt, anhand derer das jeweilige Einlassventil der jeweiligen Radbremse für die Rückwärtsfahrt geschlossen wird. Dies ist aber besonders fehleranfällig und wenig sicher, insbesondere wenn diese elektrische bzw. elektronische Bezugsgröße aufgrund einer Fehlfunktion des Anhängers bereitgestellt wird.

Aufgabe der vorliegenden Erfindung ist es, ein besonders verkehrssicheres Bremssystem für ein hydraulisch oder pneumatisch bremsbares Anhängerfahrzeug sowie ein besonders verkehrssicheres Anhängerfahrzeug bereitzustellen.

Diese Aufgabe wird durch ein Bremssystem mit den im Patentanspruch 1 angegebenen Merkmalen sowie durch ein Anhängerfahrzeug mit den im Patentanspruch 8 angegebenen Merkmalen gelöst. Merkmale, Vorteile und vorteilhafte Ausgestaltungen des erfindungsgemäßen Bremssystems sind als Merkmale, Vorteile und vorteilhafte Ausgestaltungen des erfindungsgemäßen Anhängerfahrzeugs anzusehen und umgekehrt.

Ein erfindungsgemäßes Bremssystem für ein Anhängerfahrzeug umfasst wenigstens einen von einem Bremsmedium durchströmbaren Bremskreis, der wenigstens ein Radbremselement aufweist. Das bedeutet, dass das Radbremselement in den Bremskreis integriert ist, derart, dass das Radbremselement von dem Bremsmedium durchströmbar ist. Das Bremsmedium kann dabei ein Bremsfluid (zum Beispiel Bremsflüssigkeit) oder ein Gas (zum Beispiel Luft) sein.

Des Weiteren weist das Bremssystem eine Betätigungseinrichtung auf, mittels derer ein mit einer Bremsstellung des Radbremselements korrespondierender Bremsdruck in dem Bremskreis einstellbar ist. Die Betätigungseinrichtung ist insbesondere an oder in einer Deichsel des Anhängerfahrzeugs angeordnet oder bildet zumindest einen Teil der Deichsel. Dies ist insbesondere dann der Fall, wenn die Betätigungseinrichtung ein Schieberelement einer Auflaufbremsanlage des Anhängerfahrzeugs umfasst. Es ist ferner zwischen der Betätigungseinrichtung und dem Radbremselement ein Einlassventil in dem Bremskreis angeordnet. Das Einlassventil ist demnach in den Bremskreis derart integriert, dass es von dem Bremsmedium durchströmbar ist, zumindest wenn sich das Einlassventil in einer Durchströmstellung befindet.

Zudem ist eine Steuereinheit vorgesehen, mittels derer das Einlassventil in eine Sperrstellung verstellbar ist, in welcher das Einlassventil ein Strömen des Bremsmediums hin zum

Radbremselement sperrt. Das bedeutet, dass das Einlassventil zwischen der Durchströmstellung und der Sperrstellung verstellbar ist. Bevorzugterweise ist das Einlassventil als ein elektrisch betätigbares bzw. betreibbares, stromlos offenes Einlassventil ausgebildet und mit der Steuereinheit verbunden. Insofern ist die Steuereinheit dazu ausgebildet, das Einlassventil zum Verstellen desselben zwischen der Sperrstellung und der Durchströmstellung anzusteuern. In der Durchströmstellung lässt das Einlassventil ein Strömen des Bremsmediums hin zu dem Radbremselement zu, wohingegen das Einlassventil in der Sperrstellung ein Strömen des Bremsmediums hin zum Radbremselement sperrt bzw. blockiert. Anders ausgedrückt ist das Radbremselement in der Sperrstellung des Einlassventils gegenüber dem restlichen Bremskreis fluidisch abgedichtet.

Das Bremssystem weist weiter einen Bremsdrucksensor auf, mittels dessen der Steuereinheit ein den Bremsdruck charakterisierendes Sensorsignal bereitstellbar ist. Das bedeutet, dass der Bremsdrucksensor, der an oder in einer Messstelle in den Bremskreis integriert ist, dazu ausgebildet ist, zumindest den an der Messstelle vorherrschenden Bremsdruck in dem Bremskreis zu detektieren und das mit dem Bremsdruck korrespondierende Sensorsignal, beispielsweise in Form eines elektrischen Signals, der Steuereinheit bereitzustellen.

Weiter umfasst das Bremssystem eine Raddrehzahlsensorik, mittels derer der Steuereinheit ein Raddrehzahlsignal bereitstellbar ist.

Um nun das Bremssystem besonders verkehrssicher auszubilden, ist erfindungsgemäß vorgesehen, dass die Steuereinheit dazu ausgebildet ist, abhängig von dem den Bremsdruck charakterisierenden Sensorsignal und dem Raddrehzahlsignal eine Rückwärtsfahrt des Anhängerfahrzeugs zu erfassen und abhängig von der erfassten Rückwärtsfahrt das Einlassventil für die Dauer der Rückwärtsfahrt in die Sperrstellung zu verstellen. Das bedeutet im Umkehrschluss, dass die Steuereinheit dazu ausgebildet ist, das Einlassventil nicht hin zu der Sperrstellung zu verstellen, wenn bzw. solange keine Rückwärtsfahrt, also beispielsweise eine Vorwärtsfahrt, des Anhängerfahrzeugs vorliegt.

Die Steuereinheit ist weiter dazu ausgebildet, abhängig von dem Raddrehzahlsignal das Einlassventil temporär in die Sperrstellung zu verstellen. So wird ein Stillstand unter anderem von der Vorwärtsfahrt des Anhängerfahrzeugs unterscheidbar, wobei dann insbesondere vorgesehen ist, dass die Steuereinheit nur dann das Einlassventil temporär in die Sperrstellung verstellt, wenn sich der die Rückwärtsfahrt charakterisierende Bremsdruck unmittelbar nach einem Stillstand des Anhängerfahrzeugs im Bremskreis aufbaut. Anders ausgedrückt wird das Einlassventil nicht in die Sperrstellung verstellt, wenn das Anhängerfahrzeug bei Erreichen des die Rückwärtsfahrt charakterisierenden Bremsdrucks in Vorwärtsfahrt ist. Es ist hierzu insbesondere vorgesehen, dass die Steuereinheit und die Raddrehzahlsensorik miteinander zur Übertragung des Raddrehzahlsignals verbunden sind. Alternativ hierzu kann vorgesehen sein, dass die Steuereinheit die Raddrehzahlsensorik aufweist bzw. dass die Raddrehzahlsensorik zumindest teilweise durch die Steuereinheit gebildet ist.

Auf diese Weise ist das Bremssystem besonders verkehrssicher ausgebildet, da auf ein manuelles Zutun eines Nutzers des Anhängerfahrzeugs zum Verstellen eines manuellen Betätigungselements für die Rückwärtsfahrt verzichtet werden kann. Infolgedessen ist auch ein Risiko, dass der Nutzer es vergisst, das manuelle Betätigungselement wieder in die Durchströmstellung zu verstellen besonders gering. Folglich verbleibt das Bremssystem nicht versehentlich in einen Zustand verstellt, in welchem das Radbremselement in unerwünschter Weise gegen ein Bremsen blockiert ist. Als Bezugsgröße für das Verstellen des Einlassventils ist des Weiteren der Druck in dem Bremskreis maßgeblich, sodass auf ein fehleranfälliges rein elektrisches Bezugssignal zur Erkennung bzw. Erfassung der Rückwärtsfahrt verzichtet werden kann. Beispielsweise ist es bekannt, dass ein Rückfahrscheinwerfer eines herkömmlichen Anhängerfahrzeugs über einen Schalter am Getriebe eines Zugfahrzeugs eingeschaltet bzw. ausgeschaltet wird. In Abhängigkeit davon, ob der Schalter geschlossen bzw. der Rückfahrscheinwerfer eingeschaltet ist, ist so zwar auf einfache, aber besonders fehleranfällige Weise ermöglicht, die Rückwärtsfahrt zu erkennen. Denn wenn der Schalter und/oder der Rückfahrscheinwerfer beschädigt bzw. defekt sind/ist, oder die Verkabelung defekt ist führt dies entweder zu überhaupt keinem Erkennen einer Rückwärtsfahrt oder zu einem fehlerhaften Erkennen der Rückwärtsfahrt, obwohl das Anhängerfahrzeug vorwärts fährt. Im letzten Fall würde dann das Anhängerfahrzeug mit fehlerhaft deaktivierter Bremsanlage fahren. Dadurch dass - wie erfindungsgemäß vorgeschlagen - der Bremsdruck als Bezugsgröße für das Verstellen des Einlassventils herangezogen wird, besteht dieses Risiko nicht. Demnach ist das Bremssystem nicht nur besonders verkehrssicher, sondern auch besonders zuverlässig ausgebildet.

Es ist insbesondere vorgesehen, dass die Steuereinheit des Weiteren dazu ausgebildet ist, abhängig von dem den Bremsdruck charakterisierenden Sensorsignal eine Vorwärtsfahrt des Anhängerfahrzeugs zu erfassen und abhängig von der erfassten Vorwärtsfahrt das Einlassventil dauerhaft in der Durchströmstellung zu belassen. Auf diese Weise ist sichergestellt, dass nach einem Ende der Rückwärtsfahrt, insbesondere am Beginn der Vorwärtsfahrt, das Einlassventil wieder dauerhaft in der Durchströmstellung angeordnet ist, sodass mittels des Radbremselements das Anhängerfahrzeug bestimmungsgemäß bremsbar ist. Lediglich im Sonderfall einer ABS-Regelung zur Vermeidung von Radblockade kann das Einlassventil kurzzeitig in die Sperrstellung verstellt werden.

In weiterer Ausgestaltung des Bremssystems ist vorgesehen, dass das Sensorsignal aufgrund eines Erreichens / Überschreitens eines Grenzbremsdrucks in dem Bremskreis ein die Rückwärtsfahrt, insbesondere einen Beginn der Rückwärtsfahrt, des Anhängerfahrzeugs charakterisierendes Rückfahrsignal aufweist und das Einlassventil mittels der Steuereinheit aufgrund des Rückfahrsignals temporär in die Sperrstellung verstellbar ist. Hierbei ist der Grenzbremsdruck ein vorbestimmter Wert des Bremsdrucks, der mittels des Bremsdrucksensors in dem Bremskreis gemessen wird oder messbar ist. Der Grenzbremsdruck ist dabei so bestimmt bzw. festgelegt, dass dieser während eines normalen Fahrbetriebs, insbesondere bei der Vorwärtsfahrt des Anhängerfahrzeugs, in dem Bremskreis nicht auftritt. So ist ausgeschlossen, dass im Fahrbetrieb des Anhängerfahrzeugs, beispielsweise wenn dieses mittels eines Zugfahrzeugs gezogen und schlagartig gebremst wird, in unbeabsichtigter Weise der Grenzbremsdruck in dem Bremskreis aufgebaut wird, wodurch dann in unbeabsichtigter bzw. unerwünschter Weise das Einlassventil in die Sperrstellung verstellt werden würde. Infolgedessen ist der Bremsdrucksensor dazu ausgebildet, das das Rückfahrsignal aufweisende Sensorsignal bereitzustellen, wenn der Grenzbremsdruck in dem Bremskreis erreicht wird oder wurde und/oder überschritten ist. Dementsprechend ist das Bremssystem noch verkehrssicherer ausgebildet, da ein fehlerhaftes Verstellen des Einlassventils in die Sperrstellung und infolgedessen ein Deaktivieren des Radbremselements während der Vorwärtsfahrt des Anhängerfahrzeugs wirksam vermieden ist.

In weiterer vorteilhafter Ausgestaltung des mit der Raddrehzahlsensorik ausgerüsteten Bremssystems weist das Raddrehzahlsignal ein Drehrichtungssignal auf, wobei das Einlassventil mittels der Steuereinheit abhängig von dem Drehrichtungssignal temporär in die Sperrstellung verstellbar ist. Hierzu ist vorgesehen, dass die Raddrehzahlsensorik eine Drehrichtungserkennung aufweist. Auf diese Weise kann besonders effizient zwischen einer Vorwärtsfahrt und einer Rückwärtsfahrt des Anhängerfahrzeugs unterschieden werden. Dies ist insofern vorteilhaft, als das Bremssystem noch verkehrssicherer ausgebildet ist, da aufgrund des Drehrichtungssignals, wenn dieses eine Vorwärtsfahrt des Anhängerfahrzeugs charakterisiert, die Steuereinheit das Verstellen des Einlassventils in die Sperrstellung verhindert. Demnach kann die Steuereinheit weiter dazu ausgebildet sein, das Verstellen des Einlassventils in die Sperrstellung lediglich dann zuzulassen bzw. vorzunehmen, wenn der Steuereinheit das Drehrichtungssignal bereitgestellt ist, das die Rückwärtsfahrt des Anhängerfahrzeugs charakterisiert oder zumindest den Beginn der Rückwärtsfahrt.

Im Zusammenhang mit der Raddrehzahlsensorik ist es weiter von Vorteil, wenn das Raddrehzahlsignal ein Geschwindigkeitssignal aufweist und das Einlassventil mittels der Steuereinheit abhängig von dem Geschwindigkeitssignal temporär in die Sperrstellung verstellbar ist. Dementsprechend ist vorgesehen, dass die Raddrehzahlsensorik eine Geschwindigkeitserkennung aufweist. Eine Verkehrssicherheit des Bremssystems ist so weiter gesteigert, da beispielsweise anhand des Geschwindigkeitssignals die Steuereinheit das Verstellen des Einlassventils in die Sperrstellung verhindert, etwa wenn eine momentane Fahrgeschwindigkeit des Anhängerfahrzeugs - insbesondere beim Rückwärtsfahren - eine Grenzgeschwindigkeit erreicht und/oder überschreitet. Ferner kann die Steuereinheit dazu ausgebildet sein, bei dem Erreichen und/oder Überschreiten der Maximalgeschwindigkeit das Einlassventil von der Sperrstellung (wieder zurück) in die Durchströmstellung zu verstellen. Denn es ist - abgesehen von einem Versehen und/oder einem Missbrauch - äußerst unüblich, dass mit einem Anhängerfahrzeug schneller als beispielsweise 20 km/h rückwärts gefahren wird. Aus Sicherheitsgründen bzw. zur weiteren Steigerung der Verkehrssicherheit des Bremssystems ist daher vorgesehen, dass das Einlassventil, insbesondere nach dem Überschreiten bzw. Erreichen der Grenzgeschwindigkeit von beispielsweise 20 km/h in die Durchströmstellung verstellt wird bzw. bis zu einem nächsten Stillstand des Anhängerfahrzeugs.

Das Anhängerfahrzeug kann ein automatisches Radschlupfregelsystem bzw. ein automatisches Blockierverhinderungssystem (ABV) bzw. ein Antiblockiersystem (ABS) umfassen. Dies ist insbesondere dann vorteilhaft, wenn das Anhängerfahrzeug an ein Zugfahrzeug angekoppelt ist, wodurch ein Gespann aus dem Anhängerfahrzeug und dem Zugfahrzeug gebildet ist. Denn das automatische Radschlupfregelsystem wird dann in dem Gespann zur Gespannstabilisierung, insbesondere bei einem Bremsbetrieb des Gespanns, eingesetzt. Auf diese Weise ist die Verkehrssicherheit des Gespanns besonders hoch, da ein Ausbrechen des Anhängerfahrzeugs in Bezug zu dem Zugfahrzeug besonders wirksam vermieden ist. Des Weiteren kann mittels des Radschlupfregelsystems eine besonders sichere Geradeausfahrt des Gespanns gewährleistet werden, indem beispielsweise durch selektive Bremseingriffe des Radschlupfregelsystems, ein Aufschaukeln des Anhängerfahrzeugs in Bezug zu dem Zugfahrzeug verhindert wird.

In diesem Zusammenhang ist das Bremssystem besonders einfach bzw. aufwandsarm herstellbar, wenn das Bremssystem zumindest teilweise durch Komponenten des Radschlupfregelsystems gebildet ist. Ferner ist dann ein Anhängerfahrzeug, das mit diesem Bremssystem ausgerüstet ist, besonders masseeffizient herstellbar, da zumindest die dem Bremssystem und dem Radschlupfregelsystem zugeordneten Komponenten jeweils eine Doppelfunktionalität aufweisen, nämlich - erstens - zu einer Funktionalität des Radschlupfregelsystem beitragen und - zweitens - zu einer Funktionalität des Bremssystems beitragen. Folglich ist bei einer bevorzugten Ausführungsform des Bremssystems vorgesehen, dass das Bremssystem zumindest teilweise Teil des automatischen Radschlupfregelsystems ist. So können/kann beispielsweise die Steuereinheit, das Einlassventil, die Raddrehzahlsensorik und/oder ein Leitungssystem des Bremskreises Teil des automatischen Radschlupfregelsystems sein.

Dementsprechend kann das Anhängerfahrzeug mit dem Radschlupfregelsystem zur Gespannstabilisierung ausgerüstet sein, wobei das Radschlupfregelsystem eine Steuereinheit aufweist, durch welche die Steuereinheit des Bremssystems gebildet ist. Weiter kann das Radschlupfregelsystem ein Einlassventil aufweisen, durch das das Einlassventil des Bremssystems gebildet ist. Darüber hinaus kann das Radschlupfregelsystem eine Raddrehzahlsensorik aufweisen, durch welche die Raddrehzahlsensorik des Bremssystems gebildet ist. Nicht zuletzt kann das Radschlupfregelsystem ein Leitungssystem, das von Bremsmedium durchströmbar ist, aufweisen, wobei das Leitungssystem des Bremssystems durch das Leitungssystem des Radschlupfregelsystems gebildet ist.

Es handelt sich bei dem Radschlupfregelsystem insbesondere um ein aus dem Stand der Technik bekanntes, das um die zuvor beschriebenen Eigenschaften bzw. Merkmale erweitert wurde. Es kann beispielsweise vorgesehen sein, dass die Steuereinheit des Radschlupfregelsystems lediglich softwareseitig modifiziert ist, wodurch dann die oben beschriebenen Merkmale und/oder Vorteile durch das modifizierte Radschlupfregelsystem erreicht werden. Hierdurch ist einem Gedanken an eine besonders aufwandsarme bzw. einfache Herstellung des Bremssystems in besonderem Maße Rechnung getragen. Des Weiteren ist vorstellbar, dass bereits fertig hergestellte Anhängerfahrzeuge, die ein solches Radschlupfregelsystem aufweisen, mittels eines einfachen Softwareupdates noch verkehrssicherer gemacht werden, indem diese Anhängerfahrzeuge dann nach diesem Softwareupdate die hierin beschriebenen vorteilhaften Merkmale bzw. Funktionen aufweisen.

Im Zusammenhang mit dem Radschlupfregelsystem kann des Weiteren vorgesehen sein, dass das Bremssystem ein Trennventil aufweist, mittels dessen ein Bremskreis des Radschlupfregelsystems und die Betätigungseinrichtung voneinander fluidisch abdichtbar bzw. trennbar sind. So ist es in vorteilhafterweise ermöglicht, dass das Radschlupfregelsystem unabhängig davon, ob das Zugfahrzeug das Gespann gerade bremst oder nicht, den Bremsdruck in dem Bremskreis des Radschlupfregelsystems aufzubauen, wodurch eine Antriebsschlupfregulierung (ASR) oder eine elektronische Stabilitätskontrolle (Electronic Stability Control: ESC) für das Anhängerfahrzeug realisierbar ist.

Schließlich ist bei einer weiteren Ausgestaltung des Bremssystems ein elektrisches oder elektronisches Bauelement vorgesehen, dessen Betriebsmodus mit der Rückwärtsfahrt korrespondiert, wobei die Steuereinheit dazu ausgebildet ist, abhängig von dem Betriebsmodus des Bauelements das Einlassventil temporär in dessen Sperrstellung zu verstellen. In diesem Fall kann vorgesehen sein, dass das Bauelement und die Steuereinheit separat voneinander ausgebildet sind und kabellos und/oder kabelgebunden miteinander derart verbunden sind, dass der Betriebsmodus des Bauelements der Steuereinheit bereitstellbar ist. Alternativ hierzu kann vorgesehen sein, dass die Steuereinheit jenes Bauelement aufweist. Dies ist insbesondere dann der Fall, wenn das Anhängerfahrzeug mit einem Steuergerät ausgebildet ist, das die Funktionen der Steuereinheit des Bremssystems sowie weitere Funktionen des Anhängerfahrzeugs bereitstellt, steuert und/oder regelt.

Es kann sich bei dem Bauelement beispielsweise um einen elektrischen und/oder elektronischen Verbraucher handeln, der nur dann aus einem ersten Betriebsmodus, etwa einem deaktivierten Modus, in einen von dem ersten Betriebsmodus unterschiedlichen, zweiten Betriebsmodus, zum Beispiel einen aktivierten Modus, geschaltet bzw. schaltbar ist, wenn die Rückwärtsfahrt vorliegt oder beginnt. Weiter ist das Bauelement bzw. der Verbraucher von dem zweiten Betriebsmodus bzw. dem aktivierten Modus in den ersten Betriebsmodus bzw. den deaktivierten Modus geschaltet oder schaltbar, wenn die Rückwärtsfahrt nicht (mehr) vorliegt oder die Rückwärtsfahrt endet. Anders ausgedrückt ist der Verbraucher unter einem Beginnen der Rückwärtsfahrt umschaltbar, etwa aus dem ersten in den zweiten Betriebsmodus, und unter einem Enden der Rückwärtsfahrt (erneut) umschaltbar, etwa aus dem zweiten in den ersten Betriebsmodus.

Hierdurch ist eine besonders vorteilhafte Redundanz der Bezugsgröße geschaffen, anhand derer die Steuereinheit des Bremssystems das Einlassventil zwischen Durchströmstellung und Sperrstellung umschaltet. Es wird sich nicht nur auf den Bremsdruck in dem Bremskreis verlassen, sondern zusätzlich der Betriebsmodus des elektrischen bzw. elektronischen Bauelements herangezogen. Die Steuereinheit kann in diesem Zusammenhang dazu ausgebildet sein, vor einem Verstellen des Einlassventils den Betriebsmodus des elektrischen bzw. elektronischen Bauelements und das den Bremsdruck charakterisierende Sensorsignal, insbesondere das Rückfahrsignal, gegeneinander zu evaluieren, um besonders sicher eine Fehlfunktion beim Verstellen des Einlassventils zu verhindern.

Die Erfindung betrifft des Weiteren ein Anhängerfahrzeug mit einem Bremssystem, insbesondere mit dem zuvor beschriebenen Bremssystem. Das bedeutet, dass das Anhängerfahrzeug, das mit dem Bremssystem ausgerüstet ist, die Merkmale, Vorteile und vorteilhaften Ausgestaltungen des Bremssystems aufweist.

Indem das Anhängerfahrzeug mit dem Bremssystem ausgerüstet ist, ist dieses demnach besonders verkehrssicher ausgebildet.

In weiterer Ausgestaltung des Anhängerfahrzeugs kann vorgesehen sein, dass dieses eine elektrische Antriebseinheit aufweist, mittels derer das Anhängerfahrzeug antreibbar bzw. fortbewegbar ist. Die elektrische Antriebseinheit weist mindestens eine elektrische Maschine auf sowie eine elektrische Energiespeichereinrichtung, wobei die elektrische Maschine und die elektrische Energiespeichereinrichtung miteinander elektrisch verbunden oder verbindbar sind. In einem motorischen Betrieb der elektrischen Maschine wird dieser durch die elektrische Energiespeichereinrichtung elektrische Energie bereitgestellt, welche mittels der elektrischen Maschine in mechanische Energie zum Antreiben bzw. Fortbewegen des Anhängerfahrzeugs umgewandelt wird. Alternativ oder zusätzlich kann ein generatorischer Betrieb der elektrischen Maschine vorgesehen sein, in welchem die elektrische Maschine, beispielsweise aufgrund eines Segelbetriebs des Gespanns bzw. Anhängers, mechanische Energie in elektrische Energie umwandelt und diese der elektrischen Energiespeichereinrichtung zum Laden bzw. Wiederaufladen bereitstellt.

Durch die elektrische Antriebseinheit ist zum einen die Möglichkeit geschaffen, dass Anhängerfahrzeug allein, das heißt ohne Zugfahrzeug, zu manövrieren und/oder zu rangieren. Denn ein Nutzer des Anhängerfahrzeugs braucht - insbesondere für kleinere Rangiermanöver - nicht das Zugfahrzeug an das Anhängerfahrzeug anzukoppeln; er kann aufgrund der elektrischen Antriebseinheit das Anhängerfahrzeug ohne Einsatz der Muskelkraft, das heißt besonders ergonomisch, rangieren, zum Beispiel umparken.

Des Weiteren ist mittels der elektrischen Antriebseinheit ermöglicht, ein das Anhängerfahrzeug und ein daran angekoppeltes Zugfahrzeug aufweisendes Gespann besonders kraftstoff- und/oder energieeffizient bzw. emissionsarm zu betreiben.

In einer besonders bevorzugten Ausführungsform des Anhängerfahrzeugs ist dieses mit dem die Raddrehzahlsensorik aufweisenden Bremssystem ausgerüstet. Hierbei ist dann vorgesehen, dass die Raddrehzahlsensorik zumindest teilweise durch die elektrische Antriebseinheit gebildet ist. Denn bei der elektrischen Maschine der Antriebseinheit, insbesondere wenn diese als ein Radnabenmotor ausgebildet ist, korrespondiert eine Raddrehzahl mit einer momentanen elektrischen Energieaufnahme der elektrischen Maschine bzw. des Radnabenmotors. So ist durch eine Steuereinheit der elektrischen Antriebseinheit besonders einfach eine momentane Raddrehzahl, eine momentane Drehrichtung und/oder eine momentane Raddrehgeschwindigkeit erfassbar und der Steuereinheit des Bremssystems zum Betrieb desselben bereitstellbar. Mit anderen Worten kann die Raddrehzahlsensorik Teil der elektrischen Antriebseinheit sein. Die Raddrehzahlerkennung erfolgt dann anhand einer Kommutierung des Elektromotors oder der Elektromotoren des Anhängerfahrzeugs.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Draufsicht auf ein Gespann, das ein Zugfahrzeug und ein Anhängerfahrzeug aufweist;
- Fig. 2: eine schematische Ansicht eines Bremssystems und
- Fig. 3: eine schematische Ansicht eines Bremssystem mit einem Trennventil.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

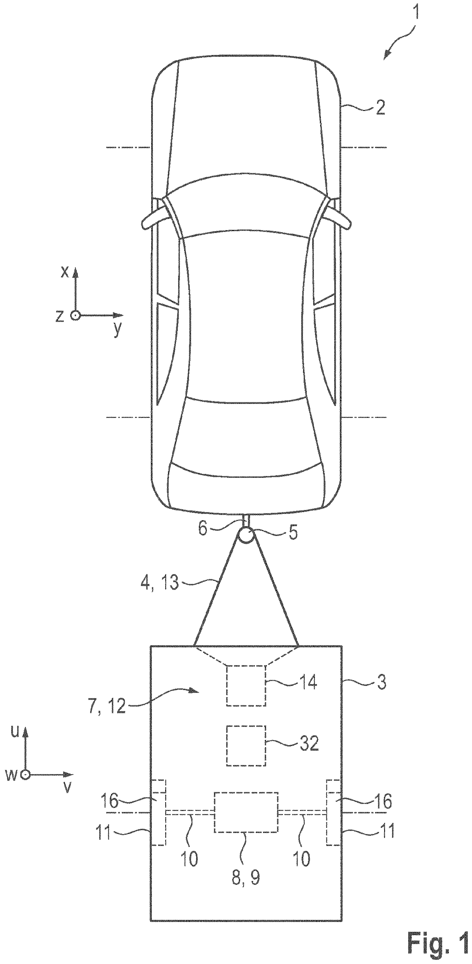

Fig. 1 zeigt in schematischer Draufsicht ein Gespann 1, das ein Zugfahrzeug 2 und ein Anhängerfahrzeug 3 aufweist. Im vorliegenden Beispiel ist das Zugfahrzeug 2 als ein Kraftwagen, insbesondere Personenkraftwagen, ausgebildet. Das Anhängerfahrzeug 3 kann vereinfacht als "Anhänger" bezeichnet werden.

Das Anhängerfahrzeug 3 weist eine Deichsel 4 auf, an dessen Spitze ein erstes Kupplungselement 5 angeordnet bzw. angebracht ist. Der Kraftwagen bzw. das Zugfahrzeug 2 weist eine Anhängerkupplung auf, die ein zweites Kupplungselement 6 umfasst, das mit dem Kupplungselement 5 des Anhängerfahrzeugs 3 korrespondiert. Sind nun das Zugfahrzeug 2 und das Anhängerfahrzeug 3 zu dem Gespann 1 miteinander verbunden bzw. aneinander angekoppelt, greifen die Kupplungselemente 5, 6 ineinander ein, sodass eine mechanische Verbindung zwischen dem Zugfahrzeug 2 und dem Anhängerfahrzeug 3 gebildet ist. Ist das Gespann 1 gestreckt, beispielsweise bei einer Geradeausfahrt des Gespanns 1, fallen eine Fahrzeuglängsachse x des Zugfahrzeugs 2 und eine Fahrzeuglängsachse u des Anhängerfahrzeugs 3 miteinander zusammen.

Das Anhängerfahrzeug 3 weist ein Bremssystem 7 auf, das in Fig. 1 lediglich schematisch angedeutet ist und weiter unten noch genauer beschrieben wird. Im vorliegenden Beispiel ist das Anhängerfahrzeug 3 elektrisch antreibbar bzw. fortbewegbar ausgebildet. Das bedeutet, dass das Anhängerfahrzeug 3 im vorliegenden Beispiel eine elektrische Antriebseinheit 8 aufweist, die wenigstens eine elektrische Maschine 9 umfasst. Des Weiteren umfasst die elektrische Antriebseinheit 8 eine elektrische Energiespeichereinrichtung (nicht dargestellt), mittels welcher der elektrischen Maschine 9 elektrische Energie zum Antreiben bzw. Fortbewegen des Anhängerfahrzeugs 3 bereitstellbar ist. In Fig. 1 ist dargestellt, dass die elektrische Maschine 9, bzw. der Elektromotor, über Wellen 10 mit Rädern 11 des Anhängerfahrzeugs 3 verbunden ist, wobei die Räder 11 und die Welle 10 zueinander drehfest aneinander befestigt sind. Alternativ oder zusätzlich kann vorgesehen sein, dass die elektrische Antriebseinheit 8 mehr als eine elektrische Maschine 9 aufweist. Des Weiteren ist die positionelle Lage der elektrischen Maschine 9, wie sie in Fig. 1 dargestellt ist, ebenfalls nur beispielhaft. So kann etwa vorgesehen sein, dass die elektrische Antriebseinheit 8, insbesondere je Rad 11 des Anhängerfahrzeugs 3, eine elektrische Maschine 9 aufweist. Hierbei kann die jeweilige elektrische Maschine 9 beispielsweise als ein Radnabenmotor ausgebildet sein.

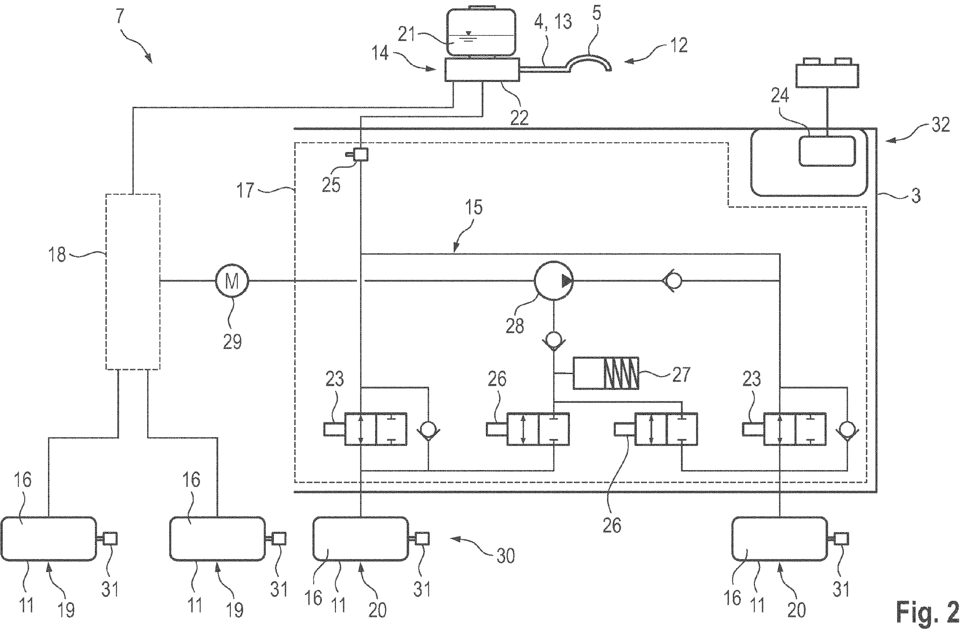

Unabhängig davon, ob das Anhängerfahrzeug 3 mit der elektrischen Antriebseinheit 8 ausgebildet ist, ist dieses vorliegend mit einer Auflaufbremsanlage 12 ausgerüstet. Für das Gespann 1 bedeutet das, dass ein Abbremsen des Anhängerfahrzeugs 3 mittels der Auflaufbremsanlage 12 immer dann erfolgt, wenn eine Fahrgeschwindigkeit des Anhängerfahrzeugs 3 höher ist als eine Fahrgeschwindigkeit des Zugfahrzeugs 2. In diesem Fall wird mittels eines Betätigungselements 13 einer Betätigungseinrichtung 14 ein Bremsmedium 21 in einem Leitungssystem 15 (siehe Fig. 2) mit einem Bremsdruck beaufschlagt, der sich an wenigstens einem Radbremselement 16 auswirkt. Aufgrund des mit dem Bremsdruck beaufschlagten Bremsmediums 21 wird das Radbremselement 16, das als ein Bremsbelag ausgebildet ist, an eine drehfest mit dem entsprechenden Rad 11 verbundene Bremsscheibe oder Bremstrommel angelegt, sodass zwischen dem Radbremselement 16 und der Bremsscheibe bzw. Bremstrommel eine Reibung und infolgedessen ein Bremsen des Anhängerfahrzeugs 3 entsteht.

Das Betätigungselement 13 ist insbesondere Teil der Deichsel 4 und wird mittels eines zumindest im Wesentlichen entspannten Federelements in einer Zugstellung gehalten. Das Federelement ist entspannt bzw. das Betätigungselement 13 nimmt die Zugstellung ein, wenn die Fahrgeschwindigkeit des Zugfahrzeugs 2 und die Fahrgeschwindigkeit des Anhängerfahrzeugs 3 gleich sind. Das bedeutet, dass das Federelement gespannt wird bzw. dass das Betätigungselement 13 aus der Zugstellung in eine Bremsstellung verstellt wird, wenn die Fahrgeschwindigkeit des Anhängerfahrzeugs 3 größer ist als die Fahrgeschwindigkeit des Zugfahrzeugs 2. Hierbei wird dann - wie bereits beschrieben - das Bremsmedium 21 mit dem Bremsdruck beaufschlagt. Der Bremsdruck, mit dem das Bremsmedium 21 bei dem Auflaufen des Anhängerfahrzeugs 3 auf das Zugfahrzeug 2 beaufschlagt wird, korrespondiert demnach mit einem Verstellweg des Betätigungselements 13 in Richtung hin zu der Bremsstellung bzw. in die Bremsstellung. Anders ausgedrückt ist der Bremsdruck umso höher je größer der Verstellweg des Betätigungselements 13 ist bzw. je stärker das Anhängerfahrzeug 3 auf das Zugfahrzeug 2 aufläuft.

Ein derartiges Bremsen wird aber auch dann ausgelöst, wenn das Zugfahrzeug 2 entgegen der Vorwärtsfahrtrichtung (x bzw. u) auf das Anhängerfahrzeug 3 aufläuft, was beispielsweise dann der Fall ist, wenn mit dem Gespann 1 rückwärts gefahren werden soll. Um diesem Problem Herr zu werden, weist das Bremssystem 7 noch weitere Elemente auf, die im Folgenden näher erklärt werden.

Hierzu zeigt Fig. 2 eine schematische Ansicht des Bremssystems 7. Es ist zu erkennen, dass das Bremssystem 7 wenigstens einen Bremskreis 17, im vorliegenden Beispiel einen ersten Bremskreis 17 und optional wenigstens einen weiteren Bremskreis 18, aufweist. Das Bremssystem 7 bzw. das Anhängerfahrzeug 3 kann eine Anzahl von Bremskreisen aufweisen, die einer Anzahl von Achsen und/oder Achsgruppen des Anhängerfahrzeugs 3 entspricht. Alternativ können alle Räder einer Anhängerseite vom selben Teil des Bremskreises mit Bremsdruck versorgt werden.

Der Bremskreis 17, 18 ist von einem Bremsmedium 21 durchströmbar und mit dem Bremsmedium 21 zumindest größtenteils befüllt. Wie bereits im Zusammenhang mit Fig. 1 beschrieben, ist mittels des Betätigungselements 13 ein Bremsdruck in dem Bremskreis 17, 18 einstellbar, beispielsweise indem das Betätigungselement 13 bei einem Auflaufen des Anhängerfahrzeugs 3 auf das Zugfahrzeug 2 weiteres Bremsmedium 21 mittels eines Kolbens eines Hauptbremszylinders 22 in das Leitungssystem 15 des Bremskreises 17, 18 hineindrückt.

Das Bremssystem 7 weist weiter je Einlassventil 23 ein Radbremselement 16 oder mehrere Radbremselemente 16 auf, wobei das jeweilige Einlassventil 23 zwischen der Betätigungseinrichtung 14 bzw. dem Hauptbremszylinder 22 und dem/den jeweiligen Radbremselement(en) 16 in dem Bremskreis 17, 18 integriert ist.

Im Weiteren wird zur einfachen Darstellung davon ausgegangen, dass
- jedem Einlassventil 23 nur ein Radbremselement 16 zugeordnet ist,
- das Anhängerfahrzeug 3 lediglich eine Achse hat und somit das Bremssystem 7 nur den einen Bremskreis 17 aufweist, und
- das Einlassventil 23 ein stromlos offenes Ventil ist, sodass es im unbestromten Zustand durch Federbelastung immer in die Durchströmstellung und im bestromten Zustand in die Sperrstellung geschaltet ist.

Die Bremskreise des Bremssystems 7 sind im vorliegenden Beispiel fluidtechnisch gleich ausgebildet, sodass im Folgenden stellvertretend für die Bremskreise des Bremssystems 7 lediglich der Bremskreis 17 beschrieben wird.

Strömt also aufgrund des Auflaufens des Anhängerfahrzeugs 3 auf das Zugfahrzeug 2 Bremsmedium 21 von dem Hauptbremszylinder 22 in Richtung hin zu den Radbremselementen 16, durchströmt das Bremsmedium 21 die Einlassventile 23, sofern diese in der jeweiligen Durchströmstellung angeordnet, das heißt unbestromt sind. Mit anderen Worten lässt das jeweilige Einlassventil 23 ein Strömen von Bremsmedium 21 hin zu dem jeweiligen Radbremselement 16 zu, wenn das Einlassventil 23 in Durchströmstellung steht. Das jeweilige Einlassventil 23 ist aus der Durchströmstellung in eine Sperrstellung verstellbar, in welcher das jeweilige Einlassventil 23 das Strömen des Bremsmediums 21 hin zu dem jeweiligen Radbremselement 16 sperrt. Ist das jeweilige Einlassventil 23 in die Sperrstellung geschaltet, ist das jeweilige Radbremselement 16 von dem in dem Bremskreis 17 vorherrschenden Bremsdruck entkoppelt. Mit anderen Worten wird der Bremsdruck des Bremsmediums im Radbremselement 16 nach Umschalten des Einlassventils 23 in die Sperrstellung eingefroren bzw. auf dem aktuellen Bremsdruck konstant gehalten. Wenn das Umschalten des Einlassventils 23 in die Sperrstellung vor Beginn eines Druckaufbaus durch den Hauptbremszylinder 22 erfolgt, dann ist also das Bremselement 16 drucklos, und es findet keine Bremswirkung statt.

Das Bremssystem 7 weist darüber hinaus eine Steuereinheit 24 auf, die mit dem jeweiligen Einlassventil 23 verbunden ist. Da es sich bei der Steuereinheit 24 insbesondere um eine elektronische Steuereinheit handelt, ist vorgesehen, dass die Einlassventile 23 jeweils elektrisch und/oder elektronisch ansteuerbar sind. Dann ist die Steuereinheit 24 dazu ausgebildet, die Einlassventile 23 einzeln und/oder gruppenweise zwischen der Durchströmstellung und der Sperrstellung zu verstellen.

Es ist weiter ein Bremsdrucksensor 25 bei dem Bremssystem 7 vorgesehen, der an oder in einer Messstelle des Bremskreises 17 den Bremsdruck in dem Leitungssystem 15 detektiert und ein damit korrespondierendes Sensorsignal bereitstellt. Da die Steuereinheit 24 und der Bremsdrucksensor 25 miteinander verbunden sind, ist vorgesehen, dass der Bremsdrucksensor 25 der Steuereinheit 24 das den Bremsdruck charakterisierende Sensorsignal bereitstellt. Die Messstelle bzw. der Bremsdrucksensor 25 sind insbesondere zwischen der Betätigungseinrichtung 14 bzw. dem Hauptbremszylinder 22 und den Einlassventilen 23 ausgebildet.

In Fig. 2 ist des Weiteren eine Raddrehzahlsensorik 30 gezeigt, die im vorliegenden Beispiel vier Raddrehzahlsensoren 31 aufweist. Das bedeutet, dass die Raddrehzahlsensorik 30 eine Anzahl von Raddrehzahlsensoren 31 aufweist, die einer Anzahl der Räder 11 entspricht, mit denen das Anhängerfahrzeug 3 ausgerüstet ist. Mittels der Raddrehzahlsensorik 30 bzw. mittels der Raddrehzahlsensoren 31 ist der Steuereinheit 24 ein Raddrehzahlsignal bereitstellbar, wobei die Steuereinheit 24 dazu ausgebildet ist, abhängig von dem jeweiligen Raddrehzahlsignal das jeweilige Einlassventil 23 dauerhaft in die Sperrstellung zu verstellen.

Wenn nun das das Zugfahrzeug 2 aus dem Stillstand heraus rückwärts anfährt und auf das stehende Anhängerfahrzeug 3 aufläuft, beispielsweise um das Anhängerfahrzeug 3 rückwärts zu drücken, erhöht sich der Bremsdruck in dem Bremskreis 17, insbesondere in dem Leitungssystem 15, sodass mittels der Steuereinheit 24 aus der Kombination der Raddrehzahlsignale und des den Bremsdruck charakterisierenden Sensorsignals erkannt wird, dass ein Beginn einer Rückwärtsfahrt des Gespanns 1 bzw. des Anhängerfahrzeugs 3 vorliegt. Denn indem der Bremsdruck in dem Bremskreis 17 basierend auf der Rückwärtsfahrt bzw. auf dem Beginn der Rückwärtsfahrt erhöht wird, wird ein entsprechendes Sensorsignal durch den Bremsdrucksensor 25 der Steuereinheit 24 bereitgestellt, wobei dann das Sensorsignal die Rückwärtsfahrt bzw. den Beginn der Rückwärtsfahrt des Anhängerfahrzeugs 3 bzw. des Gespanns 1 charakterisiert. Es ist dann vorgesehen, dass die Steuereinheit 24 abhängig von der Rückwärtsfahrt bzw. abhängig von dem die Rückwärtsfahrt charakterisierenden Sensorsignal die Einlassventile 23 für die Dauer der Rückwärtsfahrt in die Sperrstellung verstellt, indem die Steuereinheit 24 die Einlassventile 23 entsprechend ansteuert. Auf diese Weise sind für die Rückwärtsfahrt bzw. bei der Rückwärtsfahrt die Radbremselemente 16 deaktiviert, sodass sich zumindest kein weiterer Bremsdruck an den Radbremselementen 16 auswirkt.

Es kann beispielsweise mittels der Raddrehzahlsensorik 30 bzw. mittels der Raddrehzahlsensoren 31 unterschieden werden, ob das Anhängerfahrzeug 3 aktuell bewegt bzw. gezogen oder anderweitig angetrieben ist oder ob das Anhängerfahrzeug 3 im Stillstand ist. Es ist dann vorteilhaft, wenn die Steuereinheit 24 derart ausgebildet ist, dass diese ein Umschalten der Einlassventile 23 in die Sperrstellung für die Dauer der Rückwärtsfahrt nur dann zulässt, wenn über die Raddrehzahlsensorik 30 zuvor, insbesondere unmittelbar zuvor, detektiert bzw. festgestellt wurde, dass das Anhängerfahrzeug 3 im Stillstand gewesen ist. So ist verhinderbar, dass die Radbremselemente 16 fälschlicherweise bzw. unerwünschterweise deaktiviert werden, wodurch sich eine Verkehrssicherheit des Bremssystems 7 bzw. des damit ausgerüsteten Anhängerfahrzeugs 3 verringern würde.

Um Bremsdruck, der sich vor dem Verstellen der Einlassventile 23 in die Sperrstellung zwischen den Einlassventilen 23 und den Radbremselementen 16 aufgebaut hat, wieder entlassen zu können, weist das Bremssystem 7 vorliegend je Radbremselement 16 ein Auslassventil 26 auf, welches insbesondere dann in dessen Durchströmstellung verstellt wird, wenn die Einlassventile 23 für die Dauer der Rückwärtsfahrt in die Sperrstellung verstellt werden oder sind. Auf diese Weise ist der Bremsdruck bzw. das mit dem Bremsdruck beaufschlagte Bremsmedium von den Radbremselementen 16 wegleitbar, insbesondere hin zu einem oder in einen hydraulischen Akkumulator 27. Um das aus den Radbremselementen 16 entlassene und gegebenenfalls in den hydraulischen Akkumulator 27 geströmte Bremsmedium 21 wieder hin zu der Betätigungseinrichtung 14, insbesondere in den Hauptbremszylinder 22, zurückzuführen, weist der Bremskreis 17 eine Pumpeinrichtung 28 auf, beispielsweise eine mittels eines Pumpenmotors 29 antreibbare Pumpeinrichtung. Hierbei ist eine Saugseite der Pumpeinrichtung 28 fluidisch mit dem hydraulischen Akkumulator 27 (der beispielsweise als ein Niederdruckspeicher ausgebildet sein kann) verbunden und je nach Stellung der Auslassventile 26 fluidisch mit den Radbremselementen 16 verbindbar. Eine Druckseite der Pumpeinrichtung 28 ist fluidisch mit dem Hauptbremszylinder 22 bzw. mit der Betätigungseinrichtung 14 verbunden, sodass mittels der Pumpeinrichtung 28 das Bremsmedium aus den Radbremselementen 16 und/oder aus dem hydraulischen Akkumulator 27 hin zu und schließlich in den Hauptbremszylinder 22 pumpbar ist.

Um die Einlassventile 23 und/oder die Auslassventile 26 zwischen ihrer jeweiligen Durchströmstellung und ihrer jeweiligen Sperrstellung zu verstellen, ist weiterhin vorgesehen, dass die Steuereinheit 24 dieses Verstellen der Ventile 23, 26 vornimmt, wenn der Steuereinheit 24 mittels des Bremsdrucksensors 25 ein Rückfahrsignal bereitgestellt wird, das der Bremsdrucksensor 25 erzeugt, wenn in dem Bremskreis 17 ein vorbestimmter Grenzbremsdruck erreicht und/oder überschritten wird. Die Steuereinheit 24 ist dazu ausgebildet, die jeweilige Stellung der Ventile 23, 26 für die Dauer der Rückwärtsfahrt zu halten. Um das Bremssystem 7 besonders sicher auszubilden, ist es von besonderem Vorteil, wenn die Einlassventile 23 mit einer elektrischen Spannung zu versorgen sind, um diese in die Sperrstellung zu verstellen. Gleichermaßen ist es vorteilhaft, wenn die Auslassventile 26 mit einer elektrischen Spannung zu versorgen sind, um diese in die Durchströmstellung zu verstellen. Anders ausgedrückt - und wie weiter oben bereits dargelegt - ist das jeweilige Einlassventil 23 stromlos offen und das jeweilige Auslassventil 26 stromlos geschlossen.

Der jeweilige Raddrehzahlsensor 31 kann dazu ausgebildet sein, eine Drehrichtung des jeweiligen Rads 11 zu detektieren bzw. zu ermitteln, wodurch dann die Raddrehzahlsensorik 30 dazu ausgebildet ist, der Steuereinheit 24 die jeweilige Drehrichtung des entsprechend dem jeweiligen Raddrehzahlsensor 31 zugeordneten Rads 11 des Anhängerfahrzeugs 3 bereitzustellen. Hierdurch ist eine besonders effiziente Fahrtrichtungserkennung einer Momentanfahrt des Anhängerfahrzeugs 3 realisiert, wobei die Steuereinheit 24 in vorteilhafter Weise dazu ausgebildet ist, das Umschalten der Einlassventile 23 in die Sperrstellung nur dann vorzunehmen bzw. zuzulassen, wenn das Anhängerfahrzeug 3 gerade nicht vorwärts fährt. So ist wirksam verhindert, dass das jeweilige Radbremselement 16 deaktiviert wird, während mit dem Anhängerfahrzeug 3 vorwärts gefahren wird, beispielsweise indem das Anhängerfahrzeug 3 mittels des Zugfahrzeugs 2 gezogen wird.

Die Steuereinheit 24 ist des Weiteren dazu ausgebildet, das Umschalten der Einlassventile 23 in Abhängigkeit einer Momentangeschwindigkeit des Anhängerfahrzeugs 3 vorzunehmen oder zu verhindern. Hierzu ist vorgesehen, dass mittels der Raddrehzahlsensoren 31 eine jeweilige Momentangeschwindigkeit des jeweils zugeordneten Rads 11 des Anhängerfahrzeugs 3 erfasst wird und ein dementsprechendes Geschwindigkeitssignal der Steuereinheit 24 bereitgestellt wird. Im vorliegenden Beispiel ist in der Steuereinheit 24 ein Wert einer Maximalgeschwindigkeit hinterlegt, bis zu welcher es zulässig ist, dass mittels der Steuereinheit 24 die Einlassventile 23 in die Sperrstellung umgeschaltet werden oder in der Sperrstellung gehalten werden. Ausgehend von einem Zustand, in welchem mittels der Steuereinheit 24 die Einlassventile 23 in der Sperrstellung gehalten werden, werden die Einlassventile 23 mittels der Steuereinheit 24 in die Durchströmstellung geschaltet, wenn die Maximalgeschwindigkeit erreicht und/oder überschritten wird. Mit anderen Worten sind die Radbremselemente 16 (wieder) aktiviert, wenn die Maximalgeschwindigkeit erreicht und/oder überschritten ist. Ausgehend von einem anderen Zustand des Bremssystems 7, in welchem mittels der Steuereinheit 24 die Einlassventile 23 in der Durchströmstellung gehalten sind, verhindert die Steuereinheit 24 das Verstellen der Einlassventile 23 in die Sperrstellung, wenn die Maximalgeschwindigkeit erreicht und/oder überschritten ist.

Wie bereits weiter oben erwähnt, weist das Anhängerfahrzeug 3 im vorliegenden Beispiel die elektrische Antriebseinheit 8 auf, wobei im Zusammenhang mit dem die Raddrehzahlsensorik 30 aufweisenden Bremssystem 7 dann vorgesehen ist, dass diese zumindest teilweise durch die elektrische Antriebseinheit 8 gebildet ist. Hierzu ist vorgesehen, dass die Steuereinheit 24 und die elektrische Antriebseinheit 8 miteinander zur Datenübertragung verbunden sind, sodass durch die elektrische Antriebseinheit 8 der Steuereinheit 24 entsprechende Daten bzw. Signale bereitstellbar sind. So kann der elektrischen Antriebseinheit 8 der Steuereinheit 24 aufgrund einer momentanen Energieaufnahme bzw. Leistungsaufnahme der elektrischen Maschine 9 ein mit einer momentanen Beschleunigung und/oder momentanen Fahrgeschwindigkeit des Anhängerfahrzeugs 3 korrespondierendes Signal bereitgestellt werden, das wiederum dazu herangezogen werden kann, zu entscheiden, ob die Einlassventile 23 zwischen der Sperrstellung und der Durchströmstellung umzuschalten sind. Des Weiteren kann die Raddrehzahlerkennung mittels der elektrischen Antriebseinheit 8 und/oder mittels der Steuereinheit 24 erfolgen, anhand einer Kommutierung der elektrischen Maschine 9 oder der elektrischen Maschinen 9 des Anhängerfahrzeugs 3.

Im vorliegenden Beispiel ist das Anhängerfahrzeug 3 mit einem automatischen Radschlupfregelsystem 32 ausgerüstet, durch welches zumindest teilweise das Bremssystem 7 gebildet ist. So kann beispielsweise vorgesehen sein, dass das Radschlupfregelsystem 32 die Steuereinheit 24 des Bremssystems 7 aufweist und/oder dass die Steuereinheit 24 durch das Radschlupfregelsystem 32 gebildet ist. Das bedeutet, dass dann die Steuereinheit 24 eine Doppelfunktionalität aufweist, nämlich einerseits Funktionen des Radschlupfregelsystems 32 bereitstellt und andererseits die hierein beschriebenen Funktionen des Bremssystems 7 bereitstellt. Es kann des Weiteren vorteilhaft sein, wenn durch eine Ventilanordnung des Radschlupfregelsystems 32 die Einlassventile 23, die Auslassventile 26 und/oder die Raddrehzahlsensorik 30 des Bremssystems 7 zumindest teilweise gebildet sind. Auf diese Weise ist es besonders einfach ermöglicht, das Radschlupfregelsystem 32 und das Bremssystem 7, beispielsweise in Baueinheit, miteinander auszubilden.

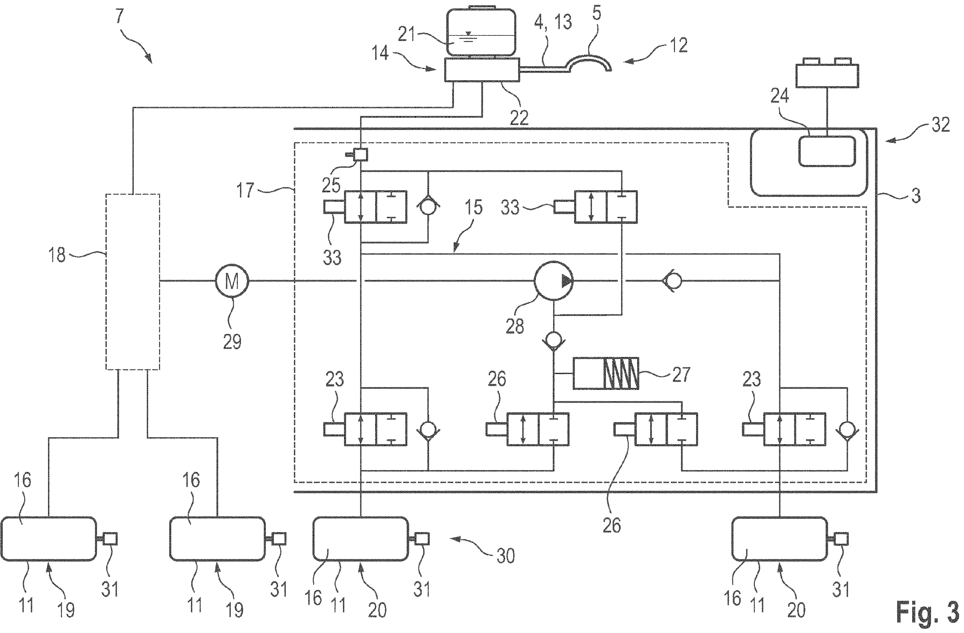

Fig. 3 zeigt in einer schematischen Ansicht das Bremssystem 7, das mit einem Trennventil 33 ausgestattet ist. Im vorliegenden Beispiel sind mittels des Trennventils 33 der Bremskreis 17 und die Betätigungseinrichtung 14 gegeneinander fluidisch abdichtbar bzw. voneinander trennbar. Hierzu ist das Trennventil 33 zwischen einer Durchströmstellung und einer Sperrstellung umschaltbar, wobei die Trennventile 33 den Bremskreis 17 und die Betätigungseinrichtung 14 fluidisch voneinander trennen, wenn das Trennventil 33 in die Sperrstellung geschaltet ist. Sind also der Bremskreis 17 und die Betätigungseinrichtung 14, insbesondere der Hauptbremszylinder 22, fluidisch voneinander getrennt, sind der Druck in dem Bremskreis 17 und ein Bremsdruck in der Betätigungseinrichtung 14 bzw. in dem Hauptbremszylinder 22 voneinander entkoppelt. Infolgedessen ist es ermöglicht, dass mittels des Radschlupfregelsystems 32 unabhängig von der Betätigungseinrichtung 14, beispielsweise mittels der Pumpeinrichtung 28, ein Bremsdruck aufgebaut bzw. eingestellt wird, der sich an den Radbremselementen 16 auswirkt, wodurch dann das Anhängerfahrzeug 3 einer Bremsung, insbesondere einer radindividuellen Bremsung, unterworfen werden kann. Auf diese Weise stellt das Radschlupfregelsystem 32 eine einem ESP (Electronic Stability Program: Elektronisches Stabilitätsprogramm) entsprechende und eine einer Antriebsschlupfregelung (ASR) entsprechende Funktionalität für das Anhängerfahrzeug 3 bereit. Hierdurch ist, wenn das Zugfahrzeug 2 und das Anhängerfahrzeug 3 aneinandergekoppelt das Gespann 1 bilden, in besonders vorteilhafterweise eine besonders effiziente Gespannstabilisierung durch das Radschlupfregelsystem 32 bereitgestellt. Dies ist unabhängig von einem momentanen Bremszustand des Zugfahrzeugs 2.

Insgesamt zeigt die Erfindung, wie mittels des Bremssystems 7 des Anhängerfahrzeugs 3 die Verkehrssicherheit verbessert wird. Gelöst dies insbesondere durch das Radschlupfregelsystem 32, wie es etwa in hydraulischen Bremsanlagen von Personenkraftwagen verbaut wird. Insbesondere wenn das Anhängerfahrzeug 3 elektrisch angetrieben oder antreibbar ausgebildet ist und zweckmäßigerweise besonders hohe Reichweiten erzielt werden sollen, wird voraussichtlich die Hochvoltbatterie bzw. Traktionsbatterie hinsichtlich deren Kapazität in etwa entsprechend ihres Pendants aus einem elektrisch angetriebenen bzw. antreibbaren Personenkraftwagen, also zwischen 50 kWh und 100 kWh, ausgelegt werden. Zusammen mit der elektrischen Antriebseinheit 8 im Anhängerfahrzeug 3 sind so besonders hohe Herstellkosten für das Anhängerfahrzeug 3 zu erwarten. Hieraus resultiert ein besonders hoher Anschaffungspreis für den Endverbraucher, wonach dieser dann eine entsprechend hochwertige Ausstattung des Anhängerfahrzeugs 3 erwartet, beispielsweise nicht nur eine primitive Seilzugbremsanlage. Stattdessen sollte das Anhängerfahrzeug 3 eine Bremsanlage mit ABS, Gespannstabilisierung und Maßnahmen zur Bremswegreduzierung aufweisen.

Da das Radschlupfregelsystem 32, das beispielsweise als das Antiblockiersystem ausgebildet ist, je Radbremselement 16 ein Einlassventil 23 und ein Auslassventil 26 aufweist, kann sich eine Rückwärtsfahrt des Anhängerfahrzeugs 3 beispielsweise so darstellen, dass zu Beginn der Rückwärtsfahrt durch den Hauptbremszylinder 22 in dem Bremskreis 17 und in den Radbremselementen 16 ein Bremsdruck aufgebaut wird. Hiernach kann mittels des Radschlupfregelsystems 32 das jeweilige Einlassventil 23 geschlossen werden, sodass kein weiterer Druckaufbau in den Radbremselementen 16 mehr möglich ist. Des Weiteren kann mittels des Radschlupfregelsystems 32 das jeweilige Auslassventil 26 geöffnet werden, sodass das in dem Radbremselement 16 mit dem Bremsdruck beaufschlagte Bremsmedium 21 in den hydraulischen Akkumulator 27 bzw. in den Niederdruckspeicher abgelassen wird. Hierdurch wird das Radbremselement 16 drucklos.

Mittels der Pumpeinrichtung 28, die eine Rückförderpumpe des Radschlupfregelsystems 32 darstellen kann, ist das Bremsmedium 21, insbesondere nach Ende der Rückwärtsfahrt, wieder in den Hauptbremszylinder 22 zurückförderbar.

Es kann optional ein von dem Bremsdrucksensor 25 separater, weiterer Bremsdrucksensor zwischen dem Hauptbremszylinder 22 und den Einlassventilen 23 vorgesehen sein, mittels dessen feststellbar ist, ob und wie stark bzw. mit welcher Kraft das Zugfahrzeug 2 gegen den Kupplungskopf bzw. gegen die Anhängerkupplung drückt.

### Bezugszeichenliste

- 1: Gespann
- 2: Zugfahrzeug
- 3: Anhängerfahrzeug
- 4: Deichsel
- 5: Kupplungselement
- 6: Kupplungselement
- 7: Bremssystem
- 8: Antriebseinheit
- 9: elektrische Maschine
- 10: Welle
- 11: Rad
- 12: Auflaufbremsanlage
- 13: Betätigungselements
- 14: Betätigungseinrichtung
- 15: Leitungssystem
- 16: Radbremselement
- 17: Bremskreis
- 18: Bremskreis
- 19: Achse
- 20: Achse
- 21: Bremsmedium
- 22: Hauptbremszylinder
- 23: Einlassventil
- 24: Steuereinheit
- 25: Bremsdrucksensor
- 26: Auslassventil
- 27: hydraulischer Akkumulator
- 28: Pumpeinrichtung
- 29: Pumpenmotor
- 30: Raddrehzahlsensorik
- 31: Raddrehzahlsensor
- 32: Radschlupfregelsystem
- 33: Trennventil
- u: Fahrzeuglängsachse
- x: Fahrzeuglängsachse

## Patentansprüche

1. Bremssystem (7) für ein Anhängerfahrzeug (3), mit
- einem mindestens ein Radbremselement (16) aufweisenden und von einem Bremsmedium (21) durchströmbaren Bremskreis (17, 18),
- einer Betätigungseinrichtung (14, 22), mittels derer ein mit einer Bremsstellung des Radbremselements (16) korrespondierender Bremsdruck in dem Bremskreis (17, 18) einstellbar ist,
- einem zwischen der Betätigungseinrichtung (14, 22) und dem Radbremselement (16) in dem Bremskreis (17, 18) angeordneten Einlassventil (23),
- einer Steuereinheit (24), mittels derer das Einlassventil (23) in eine Sperrstellung verstellbar ist, in welcher das Einlassventil (23) ein Strömen des Bremsmediums (21) hin zum Radbremselement (16) sperrt,
- einem Bremsdrucksensor (25), mittels dessen der Steuereinheit (24) ein den Bremsdruck charakterisierendes Sensorsignal bereitstellbar ist, und
- einer Raddrehzahlsensorik (30), mittels derer der Steuereinheit (24) ein Raddrehzahlsignal bereitstellbar ist,
**dadurch gekennzeichnet, dass**
die Steuereinheit (24) dazu ausgebildet ist,
- abhängig von dem den Bremsdruck charakterisierenden Sensorsignal und dem Raddrehzahlsignal eine Rückwärtsfahrt des Anhängerfahrzeugs (3) zu erfassen und
- abhängig von der erfassten Rückwärtsfahrt das Einlassventil (23) während der Dauer der Rückwärtsfahrt in die Sperrstellung zu verstellen.

2. Bremssystem (7) nach Anspruch 1,
**dadurch gekennzeichnet, dass**
das Sensorsignal aufgrund eines Erreichens oder Überschreitens eines Grenzbremsdrucks in dem Bremskreis (17, 18) ein die Rückwärtsfahrt des Anhängerfahrzeugs (3) charakterisierendes Rückfahrsignal aufweist und das Einlassventil (23) mittels der Steuereinheit (24) während der Dauer der Rückwärtsfahrt in die Sperrstellung verstellbar ist.

3. Bremssystem (7) nach einem der vorhergehenden Ansprüche,
**dadurch gekennzeichnet, dass**
das Raddrehzahlsignal ein Drehrichtungssignal aufweist und das Einlassventil (23) mittels der Steuereinheit (24) abhängig von dem Drehrichtungssignal während der Dauer der Rückwärtsfahrt in dessen Sperrstellung verstellbar ist.

4. Bremssystem (7) nach einem der vorhergehenden Ansprüche,
**dadurch gekennzeichnet, dass**
das Raddrehzahlsignal ein Geschwindigkeitssignal aufweist und das Einlassventil (23) mittels der Steuereinheit (24) abhängig von dem Geschwindigkeitssignal während der Dauer der Rückwärtsfahrt in dessen Sperrstellung verstellbar ist.

5. Bremssystem (7) nach einem der vorhergehenden Ansprüche,
**dadurch gekennzeichnet, dass**
das Bremssystem (7) zumindest teilweise Teil eines Radschlupfregelsystems (32) ist.

6. Bremssystem (7) nach Anspruch 5,
**gekennzeichnet durch**
ein Trennventil (33), mittels dessen der Bremskreis (17, 18) und die Betätigungseinrichtung (14, 22) voneinander fluidisch abdichtbar sind.

7. Anhängerfahrzeug (3), mit einem nach einem der Ansprüche 1 bis 6 ausgebildeten Bremssystem (7).

8. Anhängerfahrzeug (3) nach Anspruch 7,
**gekennzeichnet durch**
mindestens eine elektrische Antriebseinheit (8), mittels derer das Anhängerfahrzeug (3) antreibbar ist.

9. Anhängerfahrzeug (3) nach Anspruch 8,
**dadurch gekennzeichnet, dass**
die Raddrehzahlsensorik (30) zumindest teilweise durch die mindestens eine elektrische Antriebseinheit (8) gebildet ist.

## Claims

1. Brake system (7) for a trailer vehicle (3), having
- a brake circuit (17, 18) which has at least one wheel-brake element (16) and through which a brake medium (21) is able to flow,
- an actuating device (14, 22) by means of which a brake pressure, corresponding to a braking position of the wheel-brake element (16), in the brake circuit (17, 18) is settable,
- an inlet valve (23) which is arranged in the brake circuit (17, 18) between the actuating device (14, 22) and the wheel-brake element (16),
- a control unit (24) by means of which the inlet valve (23) is adjustable into a blocking position in which the inlet valve (23) blocks a flow of the brake medium (21) towards the wheel-brake element (16),
- a brake-pressure sensor (25) by means of which the control unit (24) is able to be provided with a sensor signal that characterizes the brake pressure, and
- a wheel-rotational-speed sensor arrangement (30) by means of which the control unit (24) is able to be provided with a wheel-rotational-speed signal,
**characterized in that**
the control unit (24) is configured such that,
- according to the sensor signal characterizing the brake pressure and to the wheel-rotational-speed signal, it detects reverse travel of the trailer vehicle (3), and,
- according to the detected reverse travel, it adjusts the inlet valve (23) into the blocking position during the period of the reverse travel.

2. Brake system (7) according to Claim 1,
**characterized in that**
the sensor signal, owing to a limit brake pressure in the brake circuit (17,18) being reached or exceeded, has a reverse-driving signal that characterizes the reverse travel of the trailer vehicle (3), and the inlet valve (23) is adjustable into the blocking position during the period of the reverse travel by means of the control unit (24).

3. Brake system (7) according to either of the preceding claims,
**characterized in that**
the wheel-rotational-speed signal has a direction-of-rotation signal, and the inlet valve (23) is, according to the direction-of-rotation signal, adjustable into its blocking position during the period of the reverse travel by means of the control unit (24).

4. Brake system (7) according to one of the preceding claims,
**characterized in that**
the wheel-rotational-speed signal has a speed signal, and the inlet valve (23) is, according to the speed signal, adjustable into its blocking position during the period of the reverse travel by means of the control unit (24).

5. Brake system (7) according to one of the preceding claims,
**characterized in that**
the brake system (7) is at least partially part of a wheel-slip control system (32).

6. Brake system (7) according to Claim 5,
**characterized by**
a separating valve (33) by means of which the brake circuit (17, 18) and the actuating device (14, 22) are able to be fluidically sealed off from one another.

7. Trailer vehicle (3) having a brake system (7) which is designed according to one of Claims 1 to 6.

8. Trailer vehicle (3) according to Claim 7,
**characterized by**
at least one electric drive unit (8) by means of which the trailer vehicle (3) is drivable.

9. Trailer vehicle (3) according to Claim 8,
**characterized in that**
the wheel-rotational-speed sensor arrangement (30) is at least partially formed by the at least one electric drive unit (8).

## Revendications

1. Système de freinage (7) pour un véhicule remorque (3), comprenant
- un circuit de freinage (17, 18) présentant au moins un élément (16) de freinage de roue et à travers lequel un fluide de freinage (21) est apte à s'écouler,
- un dispositif d'actionnement (14, 22), au moyen duquel une pression de freinage correspondant à une position de freinage de l'élément (16) de freinage de roue est apte à être réglée dans le circuit de freinage (17, 18),
- une vanne d'admission (23) agencée entre le dispositif d'actionnement (14, 22) et l'élément (16) de freinage de roue dans le circuit de freinage (17, 18),
- une unité de commande (24), au moyen de laquelle la vanne d'admission (23) est apte à être réglée dans une position de blocage, dans laquelle la vanne d'admission (23) bloque un écoulement du fluide de freinage (21) vers l'élément (16) de freinage de roue,
- un capteur (25) de pression de freinage, au moyen duquel un signal de capteur caractérisant la pression de freinage est apte à être fourni à l'unité de commande (24), et
- un système (30) de détection de la vitesse de rotation de roue, au moyen duquel un signal de vitesse de rotation des roues est apte à être fourni à l'unité de commande (24),
**caractérisé en ce que**
l'unité de commande (24) est conçue pour
- détecter, en fonction du signal de capteur caractérisant la pression de freinage et du signal de vitesse de rotation des roues, un déplacement en marche arrière du véhicule remorque (3) et
- placer, en fonction du trajet en marche arrière détecté, la vanne d'admission (23) dans la position de blocage pendant la durée du trajet en marche arrière.

2. Système de freinage (7) selon la revendication 1,
**caractérisé en ce que**
le signal du capteur présente un signal de recul caractérisant la marche arrière du véhicule remorque (3) en raison de l'atteinte ou du dépassement d'une pression de freinage limite dans le circuit de freinage (17, 18) et la vanne d'admission (23) est apte à être placée dans la position de blocage au moyen de l'unité de commande (24) pendant la durée de la marche arrière.

3. Système de freinage (7) selon l'une des revendications précédentes,
**caractérisé en ce que**
le signal de vitesse de roue présente un signal de sens de rotation et la vanne d'admission (23) est apte à être placée dans sa position de blocage au moyen de l'unité de commande (24) en fonction du signal de sens de rotation pendant la durée de la marche arrière.

4. Système de freinage (7) selon l'une des revendications précédentes,
**caractérisé en ce que**
le signal de vitesse de roue présente un signal de vitesse et la vanne d'admission (23) est apte à être placée dans sa position de blocage au moyen de l'unité de commande (24) en fonction du signal de vitesse pendant la durée de la marche arrière.

5. Système de freinage (7) selon l'une des revendications précédentes,
**caractérisé en ce que**
le système de freinage (7) fait au moins partiellement partie d'un système de régulation du patinage des roues (32) .

6. Système de freinage (7) selon la revendication 5,
**caractérisé par**
une vanne de séparation (33) au moyen de laquelle le circuit de freinage (17, 18) et le dispositif d'actionnement (14, 22) sont aptes à être fluidiquement isolés l'un de l'autre.

7. Véhicule remorque (3), doté d'un système de freinage (7) conçu selon l'une des revendications 1 à 6.

8. Véhicule remorque (3) selon la revendication 7,
**caractérisé par**
au moins une unité (8) d'entraînement électrique, au moyen de laquelle le véhicule remorque (3) est apte à être entraîné.

9. Véhicule remorque (3) selon la revendication 8,
**caractérisé en ce que**
le système (30) de détection de la vitesse de rotation de roue est formé au moins en partie par ladite au moins une unité (8) d'entraînement électrique.
